# EUROPÄISCHE PATENTANMELDUNG

(11) **EP 3 173 737 A1**
(43) Veröffentlichungstag der Anmeldung: **31.05.2017**
(21) Anmeldenummer: 15197020.9
(22) Anmeldetag: 30.11.2015
(51) Int. Cl.: G01C 15/00, G01C 9/00

(54) **VERFAHREN ZUM AUSRICHTEN EINER GERÄTEACHSE IN EINEN DEFINIERTEN ZUSTAND**

(71) Anmelder: HILTI Aktiengesellschaft, 9494 Schaan (LI)
(72) Erfinder: Lukic, Sasha, 9470 Buchs (CH)
(74) Vertreter: Hilti Aktiengesellschaft Corporate Intellectual Property

(57) **Zusammenfassung**

Verfahren zum Ausrichten einer Geräteachse einer Apparatur mittels einer Nivelliereinheit in einen definierten Zustand, mit den Schritten: Speichern einer Kennlinie von Nulllagen (υ) eines Neigungssensors der Nivelliereinheit in Abhängigkeit von einer Betriebstemperatur (T) der Apparatur in einer Kontrolleinrichtung, Messen der Betriebstemperatur (T), Ermitteln der zugehörigen Nulllage (υ) des Neigungssensors zur gemessenen Betriebstemperatur (T) anhand der Kennlinie und Ausrichten der Geräteachse mittels der Nivelliereinheit in den definierten Zustand, der durch die anhand der Kennlinie ermittelte Nulllage (υ) festgelegt ist.

## Beschreibung

### Technisches Gebiet

Die vorliegende Erfindung betrifft ein Verfahren zum Ausrichten einer Geräteachse in einen definierten Zustand gemäß dem Oberbegriff des Anspruchs 1 sowie eine Apparatur gemäß dem Oberbegriff des Anspruchs 9.

### Stand der Technik

Die Genauigkeit von Apparaturen, wie Rotationslasern, wird durch die Umgebungsbedingungen, wie die Lagerungstemperatur oder die Betriebstemperatur der Apparatur, durch eine äußere Krafteinwirkung auf die Apparatur bei Stürzen oder starken Stößen und durch Alterungsprozesse der Gerätekomponenten der Apparatur beeinflusst. Die Alterung der Gerätekomponenten erfolgt auf einer langen Zeitskala und verändert die Genauigkeit einer Apparatur sehr langsam. Die äußere Krafteinwirkung auf eine Apparatur durch einen Sturz oder einen starken Stoß ist ein Ereignis, das für den Bediener unvorhersehbar ist und das von daher nur schwer berücksichtigt werden kann. Im Unterschied dazu ist die Betriebstemperatur einer Apparatur eine Größe, die die Genauigkeit der Apparatur immer beeinflusst. Bei jedem Einsatz bzw. Betrieb der Apparatur herrschen Umgebungsbedingungen vor, die die Genauigkeit der Apparatur beeinflussen.

Rotationslaser können in verschiedenen Gerätelagen, die als Horizontallage und Vertikallage ausgebildet sind, angeordnet werden. Dabei werden horizontal einsetzbare Rotationslaser, die ausschließlich in Horizontallage eingesetzt werden, und horizontal und vertikal einsetzbare Rotationslaser, die in Horizontallage und Vertikallage eingesetzt werden, unterschieden. Horizontal einsetzbare Rotationslaser weisen als Geräteachsen eine erste Horizontalachse und eine zweite Horizontalachse auf, die senkrecht zueinander verlaufen und eine Horizontalebene aufspannen. Horizontal und vertikal einsetzbare Rotationslaser weisen als Geräteachse neben der ersten und zweiten Horizontalachse eine Vertikalachse auf, die senkrecht zur Horizontalebene der ersten und zweiten Horizontalachse verläuft.

Die Gerätehersteller von Rotationslasern definieren in ihren Bedienungsanleitungen für die Betriebstemperatur des Rotationslasers einen Temperaturbereich, in dem der Rotationslaser betrieben werden darf. Der Betrieb von Rotationslasern ist typischerweise in einem Temperaturbereich von -20 °C bis +50 °C zugelassen. Die Justierung eines Rotationslasers und die Kalibrierung der Geräteachsen werden vom Gerätehersteller unter festgelegten Umgebungsbedingungen durchgeführt; die Kalibrierung der Geräteachsen erfolgt typischerweise bei Normaltemperatur von +20 °C. Um die Genauigkeit eines Rotationslasers im Betrieb zu gewährleisten, muss die Genauigkeit regelmäßig vom Bediener überprüft und bei Überschreiten einer Maximaldifferenz, die der Gerätehersteller definiert hat, eine Kalibrierung des Rotationslasers durchgeführt werden. Dabei wird die Genauigkeit des Rotationslasers für jede Geräteachse separat überprüft.

Bekannt sind Verfahren zum Überprüfen und/oder zum Kalibrieren einer Horizontalachse, die bei allen horizontal einsetzbaren Rotationslasern angewandt werden, und Verfahren zum Überprüfen und/oder zum Kalibrieren einer Vertikalachse, die ausschließlich bei vertikal einsetzbaren Rotationslasern angewandt werden. In einem ersten Verfahren wird die erste Horizontalachse überprüft und in einem zweiten Verfahren die zweite Horizontalachse, wobei die Reihenfolge, in der das erste und zweite Verfahren durchgeführt werden, beliebig ist. Bei horizontal und vertikal einsetzbaren Rotationslasern erfolgt im Anschluss an die Überprüfung der ersten und zweiten Horizontalachse eine Überprüfung der Vertikalachse in einem dritten Verfahren.

Die Ausrichtung der Geräteachsen in einen definierten Zustand erfolgt mittels einer Nivelliereinrichtung, die in einem Gerätegehäuse des Rotationslasers angeordnet ist. Der definierte Zustand der Geräteachsen kann ein horizontaler Zustand oder ein vertikaler Zustand sein. Die Nivelliereinrichtung umfasst eine erste Nivelliereinheit, die die erste Horizontalachse in einen ersten definierten Zustand ausrichtet, eine zweite Nivelliereinheit, die die zweite Horizontalachse in einen zweiten definierten Zustand ausrichtet, und bei einem vertikal einsetzbaren Rotationslaser eine dritte Nivelliereinheit, die die Vertikalachse in einen dritten definierten Zustand ausrichtet. Die Nivelliereinheiten umfassen jeweils einen Neigungssensor, der die Neigung der Geräteachse misst, und ein Verstellelement, mit dem die Neigung der Geräteachse verstellbar ist. Im Idealfall sind die Neigungssensoren parallel zu den zugeordneten Geräteachsen ausgerichtet. Ist ein Neigungssensor nicht parallel zur zugeordneten Geräteachse ausgerichtet, weist die Geräteachse einen Neigungsfehler auf.

Zum horizontalen oder vertikalen Ausrichten von Apparaturen wie Rotationslasern werden üblicherweise Libellen als Neigungssensoren eingesetzt. Ein als Libelle ausgebildeter Neigungssensor umfasst ein Gehäuse, das mit einer Flüssigkeit und einer Gasblase gefüllt ist, eine Lichtquelle und einen oder mehrere Fotodetektoren. Das Gehäuse ist durch eine konvex gewölbte Deckschicht abgeschlossen und die Gasblase bewegt sich an der Deckschicht entlang, wenn der Neigungssensor gegenüber einer horizontalen oder vertikalen Bezugsebene geneigt wird. Die Lichtquelle emittiert vorzugsweise divergentes Licht (beispielsweise LED) und ist mit einer optischen Achse des Neigungssensors zentriert, welche gleichzeitig die Symmetrieachse der Libelle bildet. Die Gasblase in der abgeschlossenen Flüssigkeit zeigt die Ausrichtung der Libelle an. Die Gasblase befindet sich stets am höchsten Punkt der Flüssigkeit. Die Libelle wird so mit der Apparatur verbunden, dass sich die Gasblase im definierten Zustand der Apparatur an einer bestimmten Stelle der Libelle befindet. Der definierte Zustand der Apparatur kann mit Hilfe der Libelle mit geringem Aufwand hergestellt oder wiederhergestellt werden. Bei dem definierten Zustand muss es sich nicht zwangsläufig um einen horizontal oder vertikal ausgerichteten Zustand der Apparatur handeln. Prinzipiell kann auch durch eine geneigte Anordnung der Libelle an der Apparatur jeder beliebige Neigungswinkel für den definierten Zustand vorgegeben werden.

Bekannte Rotationslaser, wie der Rotationslaser Laser Beacon LB-400, weisen einen Temperatursensor auf, der die Temperatur im Inneren des Gerätegehäuses des Rotationslasers misst. Wenn die gemessene Temperatur den oberen Grenzwert des zulässigen Temperaturbereichs im Betrieb überschreitet, wird der Betrieb des Rotationslasers durch Abschalten der Motoren und der Strahlquelle unterbrochen. Sobald die gemessene Temperatur unter den oberen Grenzwert fällt, kann der Betrieb des Rotationslasers fortgesetzt werden. Der Temperatursensor stellt sicher, dass die Motoren und die Strahlquelle nur innerhalb des zulässigen Temperaturbereichs betrieben werden und schützt diese Gerätekomponenten vor Beschädigung durch erhöhte Temperaturen. Die Temperatur des Rotationslasers wird beim Kalibrieren der Geräteachsen des Rotationslasers nicht berücksichtigt.

Aus DE 10 2013 217 479 A1 ist ein Rotationslaser bekannt, bei dem der Einfluss der Temperatur, der Einfluss von Beschleunigungen oder Kräften, die auf den Rotationslaser einwirken, und die Alterung der Gerätekomponenten des Rotationslasers berücksichtigt werden. Der Rotationslaser umfasst eine Überwachungseinheit und eine Sensoreinheit mit einem Temperatursensor, einem Beschleunigungssensor und einem Echtzeitsensor. Der Temperatursensor misst eine Lagerungs- oder Betriebstemperatur des Rotationslasers, der Beschleunigungssensor misst auftretende Kräfte und Beschleunigungen durch Stürze oder starke Stöße und der Echtzeitsensor misst die Zeitdauer seit der letzten ordnungsgemäßen Kalibrierung des Rotationslasers. Die Messwerte der Sensoren werden mit Hilfe der Überwachungseinheit in regelmäßigen Abständen aufgezeichnet und an eine Steuer- und Auswerteeinrichtung weitergeleitet. Für jede Messgröße sind Grenzwerte definiert und die Messwerte der Sensoren werden mit den Grenzwerten verglichen. Wenn ein Messwert außerhalb des Grenzwertes liegt, wird mit Hilfe der Überwachungseinheit ein Warnhinweis für den Bediener erzeugt. Der Warnhinweis wird optisch oder akustisch angezeigt und enthält eine Aufforderung für den Bediener, den Rotationslaser zu kalibrieren. Für die Messgröße "Temperatur" ist ein Grenzintervall mit einem unteren Grenzwert und einem oberen Grenzwert definiert, wobei der untere Grenzwert der minimalen Temperatur und der obere Grenzwert der maximalen Temperatur des zulässigen Temperaturbereichs entspricht. Für die Messgrößen "Beschleunigung" und "Zeitdauer" sind obere Grenzwerte definiert.

Das aus DE 10 2013 217 479 A1 bekannte Verfahren zum Ausrichten einer Geräteachse weist den Nachteil auf, dass der Temperatursensor an einer beliebigen Position im Gerätegehäuse des Rotationslasers angebracht werden kann. DE 10 2013 217 479 A1 macht keine Angaben über die Art des Temperatursensors und die räumliche Anordnung des Temperatursensors im Gerätegehäuse des Rotationslasers. Bei Rotationslasern, die im Außenbereich eingesetzt werden, können durch Sonneneinstrahlung innerhalb des Rotationslasers Temperaturunterschiede auftreten. Dabei können sich die Temperaturen in Bereichen des Rotationslasers mit direkter Sonneneinstrahlung um mehrere Grad Celsius von Temperaturen in abgeschatteten Bereichen unterscheiden und die gemessene Temperatur ist von der räumlichen Anordnung des Temperatursensors im Gerätegehäuse des Rotationslasers abhängig. Die gemessene Temperatur wird beim Kalibrieren der Geräteachsen des Rotationslasers nicht berücksichtigt und stellt lediglich ein Kriterium dar, wann eine Kalibrierung der Geräteachsen des Rotationslasers erforderlich ist.

### Darstellung der Erfindung

Die Aufgabe der vorliegenden Erfindung besteht in der Entwicklung eines Verfahrens zum Ausrichten einer Geräteachse in einen definierten Zustand, bei dem die Betriebstemperatur der Apparatur beim Ausrichten der Geräteachse berücksichtigt wird.

Diese Aufgabe wird bei dem eingangs genannten Verfahren zum Ausrichten einer Geräteachse in einen definierten Zustand erfindungsgemäß durch die Merkmale des unabhängigen Anspruchs 1 und bei der eingangs genannten Apparatur durch die Merkmale des unabhängigen Anspruchs 9 gelöst. Vorteilhafte Weiterbildungen sind in den abhängigen Ansprüchen angegeben.

Erfindungsgemäß weist das Verfahren zum Ausrichten einer Geräteachse in einen definierten Zustand die Schritte auf:
▪ Speichern einer Kennlinie von Nulllagen eines Neigungssensors einer Nivelliereinheit in Abhängigkeit von einer Betriebstemperatur der Apparatur oder einer von der Betriebstemperatur abhängigen Messgröße in einer Kontrolleinrichtung,
▪ Messen der Betriebstemperatur oder der Messgröße,
▪ Ermitteln der zugehörigen Nulllage des Neigungssensors zur gemessenen Betriebstemperatur oder Messgröße anhand der Kennlinie und
▪ Ausrichten der Geräteachse mittels der Nivelliereinheit in den definierten Zustand, der durch die anhand der Kennlinie ermittelte Nulllage festgelegt ist.

Das erfindungsgemäße Verfahren zum Ausrichten einer Geräteachse in einen definierten Zustand hat den Vorteil, dass die Betriebstemperatur der Apparatur beim Ausrichten der Geräteachse in den definierten Zustand berücksichtigt und die Temperaturabhängigkeit der Nulllage des Neigungssensors eliminiert wird. Als Betriebstemperatur der Apparatur wird die Temperatur bezeichnet, die beim Betrieb der Apparatur auftritt. Die Betriebstemperatur wird im Inneren des Gerätegehäuses der Apparatur mit Hilfe eines Temperatursensors gemessen oder die Betriebstemperatur wird über eine von der Betriebstemperatur abhängige Messgröße bestimmt. Der definierte Zustand, in den die Geräteachse der Apparatur mit Hilfe der Nivelliereinheit ausgerichtet wird, kann ein horizontaler Zustand, ein vertikaler Zustand oder ein geneigter Zustand der Geräteachse sein. Die in der Kontrolleinrichtung der Apparatur gespeicherte Kennlinie stellt für die Geräteachse einen Zusammenhang zwischen der Betriebstemperatur bzw. der Messgröße und der temperaturabhängigen Nulllage des Neigungssensors her. Als Nulllage des Neigungssensors ist der Neigungswinkel definiert, der dem definierten Zustand der Geräteachse entspricht. Aus der Kennlinie kann für jede Betriebstemperatur aus dem zugelassenen Betriebstemperaturbereich eine Nulllage abgelesen werden. In der Kennlinie kann zwischen Temperaturen, bei denen eine Kalibrierung der Geräteachse vorgenommen wurde, und Temperaturen, bei denen noch keine Kalibrierung der Geräteachse vorgenommen wurde, unterschieden werden.

Das erfindungsgemäße Verfahren kann auch mit einer von der Betriebstemperatur abhängigen Messgröße durchgeführt werden. In diesem Fall wird nicht die Betriebstemperatur der Apparatur gemessen, sondern die temperaturabhängige Messgröße. Als Messgröße für das erfindungsgemäße Verfahren eignen sich temperaturabhängige Größen der Apparatur, deren Temperaturabhängigkeit bekannt ist. Die Messung einer von der Betriebstemperatur abhängigen Messgröße bietet sich dann an, wenn eine Messgröße genutzt wird, die bereits für andere Zwecke gemessen wird, so dass kein zusätzlicher Messaufwand besteht, oder wenn eine Messgröße genutzt wird, die mit vorhandenen Sensorelementen gemessen werden kann, so dass kein zusätzlicher apparativer Aufwand besteht. Die Gasblase des Neigungssensors weist eine Blasenlänge auf, die temperaturabhängig ist und sich daher als Messgröße für die Betriebstemperatur eignet. Die Blasenlänge kann mit Hilfe der Lichtquelle und des Fotodetektors des Neigungssensors gemessen werden, so dass kein weiteres Sensorelement für die Messung erforderlich ist.

Bevorzugt wird die Betriebstemperatur der Apparatur mittels des Neigungssensors, der ein Gehäuse, das mit einer Flüssigkeit und einer Gasblase gefüllt ist, eine Lichtquelle und mindestens einen Fotodetektor umfasst, gemessen. Die Messung der Betriebstemperatur der Apparatur mittels des Neigungssensors hat den Vorteil, dass die Betriebstemperatur genau an dem Ort im Gerätegehäuse der Apparatur gemessen wird, der für die Ausrichtung der Geräteachse relevant ist. Die Temperaturmessung erfolgt mit Hilfe der Komponenten des Neigungssensors, so dass kein weiteres Sensorelement erforderlich ist und der apparative Aufwand für die Temperaturmessung gering ist.

Besonders bevorzugt wird in der Kontrolleinrichtung eine weitere Kennlinie von Betriebstemperaturen und Blasenlängen der Gasblase gespeichert, die Blasenlänge der Gasblase wird mittels der Lichtquelle und des Fotodetektors des Neigungssensors gemessen und die zur gemessenen Blasenlänge zugehörige Betriebstemperatur wird anhand der weiteren Kennlinie ermittelt. Der Neigungssensor der Nivelliereinheit umfasst ein Gehäuse, das mit einer Flüssigkeit und einer Gasblase gefüllt ist, eine Lichtquelle und einen oder mehrere Fotodetektoren. Die Gasblase des Neigungssensors weist eine Blasenlänge auf, die temperaturabhängig ist und sich daher als Messgröße für die Betriebstemperatur eignet. Die Blasenlänge kann mit Hilfe der Lichtquelle und des Fotodetektors des Neigungssensors gemessen werden, so dass kein weiteres Sensorelement für die Temperaturmessung erforderlich ist.

In einer Weiterentwicklung des erfindungsgemäßen Verfahrens wird die Genauigkeit, mit der die Geräteachse der Apparatur mittels der Nivelliereinheit in den definierten Zustand ausgerichtet wird, während des Betriebs der Apparatur mittels einer festgelegten Prüfschleife überprüft, wobei eine Abweichung vom definierten Zustand der Geräteachse bestimmt und mit einer Maximalabweichung verglichen wird. Der Gerätehersteller legt eine Maximalabweichung für die Geräteachse der Apparatur fest. Solange die Abweichung vom definierten Zustand der Geräteachse kleiner als die Maximalabweichung ist, kann die Apparatur bei ordnungsgemäßem Gebrauch mit der vom Gerätehersteller angegebenen Genauigkeit eingesetzt werden. Ist die Abweichung vom definierten Zustand der Geräteachse grösser als die Maximalabweichung, ist die vom Gerätehersteller angegebene Genauigkeit der Apparatur trotz ordnungsgemäßen Gebrauchs nicht gegeben und die Geräteachse muss kalibriert werden, wobei die Betriebstemperatur bei der Kalibrierung der Geräteachse berücksichtigt wird. Die Prüfschleife unterscheidet sich bei Horizontalachsen und Vertikalachsen. Wenn die Geräteachse als Horizontalachse ausgebildet ist, wird ein Verfahren zum Überprüfen einer Horizontalachse durchgeführt; wenn die Geräteachse als Vertikalachse ausgebildet ist, wird ein Verfahren zum Überprüfen einer Vertikalachse durchgeführt.

Wenn die Abweichung vom definierten Zustand der Geräteachse grösser als die Maximalabweichung ist, wird eine neue Nulllage des Neigungssensors für den definierten Zustand der Geräteachse berechnet und die Kennlinie von Nulllage und Temperatur oder von Nulllage und Messgröße wird aktualisiert. Um die Genauigkeit der Apparatur zu verbessern, führt der Bediener eine Kalibrierung der Geräteachse durch und bestimmt eine neue Nulllage des Neigungssensors für den definierten Zustand der Geräteachse. Diese neue Nulllage wird dazu genutzt, die in der Kontrolleinrichtung gespeicherte Kennlinie zu aktualisieren.

Die weiteren Verfahrensschritte des erfindungsgemäßen Verfahrens hängen davon ab, ob die in der Kontrolleinrichtung gespeicherte Kennlinie für die gemessene Betriebstemperatur oder Messgröße eine gespeicherte Nulllage des Neigungssensors für den definierten Zustand der Geräteachse aufweist. Der Gerätehersteller der Apparatur definiert einen Temperaturbereich für die Betriebstemperatur der Apparatur und kalibriert die Geräteachse bei einer Betriebstemperatur oder bei mehreren Betriebstemperaturen. Die gemessene Nulllage des Neigungssensors für den definierten Zustand der Geräteachse wird zusammen mit der Temperatur oder Messgröße als Wertepaar gespeichert. Die Genauigkeit der Apparatur wächst mit der Anzahl an verschiedenen Betriebstemperaturen oder Messgrößen, für die eine Kalibrierung der Geräteachse vorgenommen wurde. Für jede Temperatur im Betriebstemperaturbereich der Apparatur kann aus der Kennlinie eine Nulllage bestimmt werden, die für die Ausrichtung der Geräteachse in den definierten Zustand genutzt wird. Dabei wird zwischen Temperaturen, bei denen eine Kalibrierung der Geräteachse vorgenommen wurde, und Temperaturen, bei denen noch keine Kalibrierung der Geräteachse vorgenommen wurde, unterschieden. Für die Temperaturen im Betriebstemperaturbereich, für die keine Kalibrierung der Geräteachse vorgenommen wurde, erfolgt eine Interpolation aus den gespeicherten Nulllagen.

Wenn die Kennlinie für die gemessene Betriebstemperatur oder Messgröße eine gespeicherte Nulllage aufweist, wird die gespeicherte Nulllage des Neigungssensors für den definierten Zustand der Geräteachse in der Kennlinie durch die neue Nulllage ersetzt. In diesem Fall wird ein altes Wertepaar in der Kennlinie durch ein neues Wertepaar ersetzt, wobei das neue Wertepaar auch die interpolierten Nulllagen verändern kann. Die Genauigkeit der Apparatur wächst mit der Anzahl an verschiedenen Betriebstemperaturen oder Messgrößen, für die der Gerätehersteller eine Kalibrierung der Geräteachse vorgenommen hat.

Wenn die Kennlinie keine gespeicherte Nulllage des Neigungssensors für die gemessene Betriebstemperatur oder Messgröße aufweist, wird in der Kennlinie ein neues Wertepaar von Nulllage und Temperatur oder Messgröße ergänzt. Mit jedem Wertepaar, das in der Kennlinie ergänzt wird, wächst die Genauigkeit der Apparatur.

In einer bevorzugten Ausführung wird im Auslieferungszustand der Apparatur vom Hersteller die Kennlinie über einen Temperaturbereich zwischen einer unteren Temperatur und einer oberen Temperatur in der Kontrolleinrichtung gespeichert, wobei die Kennlinie mindestens zwei Wertepaare von Nulllagen des Neigungssensors für den definierten Zustand der Geräteachse und Temperaturen oder Messgrößen aufweist. Die Genauigkeit der Apparatur wächst mit der Anzahl an verschiedenen Betriebstemperaturen oder Messgrößen, für die der Gerätehersteller eine Kalibrierung der Geräteachse vorgenommen hat.

Die Apparatur ist erfindungsgemäß dadurch gekennzeichnet, dass in der Kontrolleinrichtung eine Kennlinie vorgesehen ist, die eine Nulllage des Neigungssensors für den definierten Zustand der Geräteachse in Abhängigkeit von der Betriebstemperatur der Apparatur oder einer von der Betriebstemperatur abhängigen Messgröße darstellt. Die Kennlinie stellt für die Geräteachse der Apparatur einen Zusammenhang zwischen der Betriebstemperatur bzw. Messgröße und der temperaturabhängigen Nulllage des Neigungssensors her. Aus der Kennlinie kann für jede Temperatur aus dem zugelassenen Betriebstemperaturbereich eine Nulllage des Neigungssensors abgelesen werden. Die Genauigkeit, mit der die Apparatur betrieben wird, kann durch die Verwendung einer temperaturabhängigen Nulllage des Neigungssensors erhöht werden. Eine Kalibrierung der Geräteachse ist nur dann erforderlich, wenn die Ausrichtung der Geräteachse durch eine äußere Krafteinwirkung oder durch Alterung der Gerätekomponenten verändert wurde.

Bevorzugt ist in der Kontrolleinrichtung eine weitere Kennlinie vorgesehen, die die Betriebstemperatur der Apparatur in Abhängigkeit von einer Blasenlänge der Gasblase des Neigungssensors darstellt. Der Neigungssensor umfasst ein Gehäuse, das mit einer Flüssigkeit und einer Gasblase gefüllt ist, eine Lichtquelle und einen oder mehrere Fotodetektoren. Die Gasblase des Neigungssensors weist eine Blasenlänge auf, die temperaturabhängig ist und sich daher als Messgröße für die Betriebstemperatur eignet. Die Blasenlänge der Gasblase kann mit Hilfe der Lichtquelle und des Fotodetektors gemessen werden, so dass kein weiteres Sensorelement für die Temperaturmessung erforderlich ist. Außerdem wird die Betriebstemperatur genau an dem Ort im Gerätegehäuse der Apparatur gemessen, der für die Ausrichtung der Geräteachse relevant ist.

In einer bevorzugten Weiterentwicklung weist die Apparatur eine erste Geräteachse, die mittels eines ersten Neigungssensors und eines ersten Verstellelementes in einen ersten definierten Zustand ausrichtbar ist, und eine zweite Geräteachse, die mittels eines zweiten Neigungssensors und eines zweiten Verstellelementes in einen zweiten definierten Zustand ausrichtbar ist, auf und in der Kontrolleinrichtung sind eine erste Kennlinie und zweite Kennlinie vorgesehen, wobei die erste Kennlinie eine erste Nulllage der ersten Geräteachse im ersten definierten Zustand in Abhängigkeit von der Betriebstemperatur der Apparatur oder der von der Betriebstemperatur abhängigen Messgröße darstellt und die zweite Kennlinie eine zweite Nulllage der zweiten Geräteachse im zweiten definierten Zustand in Abhängigkeit von der Betriebstemperatur der Apparatur oder der von der Betriebstemperatur abhängigen Messgröße darstellt. Der Vorteil der erfindungsgemäßen Apparatur besteht darin, dass in der Kontrolleinrichtung für jede Geräteachse der Apparatur eine eigene Kennlinie gespeichert ist, die die Abhängigkeit der Nulllage des Neigungssensors von der Betriebstemperatur oder der Messgröße darstellt. Die Apparatur weist eine erste und zweite Geräteachse auf, die mit Hilfe einer ersten und zweiten Nivelliereinheit in einen definierten Zustand ausrichtbar sind. Die erste Nivelliereinheit umfasst einen ersten Neigungssensor und ein erstes Verstellelement und die zweite Nivelliereinheit umfasst einen zweiten Neigungssensor und ein zweites Verstellelement.

Besonders bevorzugt sind in der Kontrolleinrichtung eine weitere erste Kennlinie und eine weitere zweite Kennlinie vorgesehen, wobei die weitere erste Kennlinie eine erste Temperatur eines ersten Neigungssensors in Abhängigkeit von einer ersten Blasenlänge einer ersten Gasblase darstellt und die weitere zweite Kennlinie eine zweite Temperatur eines zweiten Neigungssensors in Abhängigkeit von einer zweiten Blasenlänge einer zweiten Gasblase darstellt. Der Vorteil besteht darin, dass in der Kontrolleinrichtung für jede Geräteachse der Apparatur eine eigene weitere Kennlinie gespeichert ist, die die Abhängigkeit der Temperatur von einer Blasenlänge einer Gasblase darstellt. Der erste Neigungssensor weist eine erste Gasblase und der zweite Neigungssensor eine zweite Gasblase auf. Die erste Gasblase des ersten Neigungssensors weist eine erste Blasenlänge auf, die temperaturabhängig ist und sich daher als Messgröße für die erste Temperatur des ersten Neigungssensors eignet. Die zweite Gasblase des zweiten Neigungssensors weist eine zweite Blasenlänge auf, die temperaturabhängig ist und sich daher als Messgröße für die zweite Temperatur des zweiten Neigungssensors eignet.

Der erste und zweite Neigungssensor sind in unterschiedlichen Bereichen des Gerätegehäuses der Apparatur angeordnet und können unterschiedlichen Temperaturen ausgesetzt sein. Die Verwendung der Neigungssensoren als Temperatursensoren hat den Vorteil, dass die Temperaturen in den Bereichen im Gerätegehäuse der Apparatur gemessen werden, die für die Ausrichtung der Geräteachsen relevant sind. Die Abhängigkeit der Blasenlänge der Gasblase von der Temperatur kann sich auch bei Neigungssensoren des gleichen Sensortyps und/oder der gleichen Baureihe voneinander unterscheiden. Wenn für jeden Neigungssensor eine eigene Kennlinie erstellt wird, kann die Genauigkeit, mit der die Apparatur betrieben wird, erhöht werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Apparatur, die als horizontal und vertikal ausrichtbarer Rotationslaser mit drei Geräteachsen ausgebildet ist, wobei die Geräteachsen eine erste Horizontalachse, eine zweite Horizontalachse und eine Vertikalachse umfassen;
- FIGN. 2A, B: die wesentlichen Komponenten des Rotationslasers der FIG. 1, die eine Nivelliereinrichtung mit einer ersten Nivelliereinheit zur Ausrichtung der ersten Horizontalachse, einer zweiten Nivelliereinheit zur Ausrichtung der zweiten Horizontalachse und einer dritten Nivelliereinheit zur Ausrichtung der Vertikalachse umfassen;
- FIG. 3: den Aufbau eines Neigungssensors für die Nivelliereinheiten des Rotationslasers mit einem Gehäuse, das mit einer Flüssigkeit und einer Gasblase gefüllt ist, einer Lichtquelle und einem Fotodetektor;
- FIG. 4: eine Kennlinie von Nulllagen des Neigungssensors der FIG. 3 in Abhängigkeit von einer Temperatur; und
- FIG. 5: eine Kennlinie von Temperaturen des Neigungssensors der FIG. 3 in Abhängigkeit von der Blasenlänge der Gasblase.

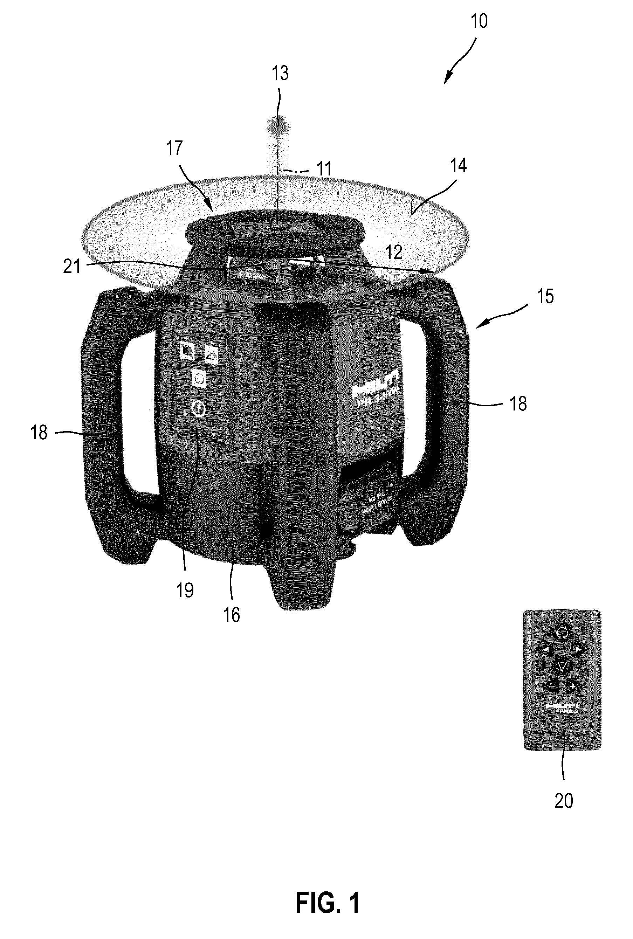

**FIG. 1** zeigt eine erfindungsgemäße Apparatur **10,** die als horizontal und vertikal ausrichtbarer Rotationslaser ausgebildet ist. Der Rotationslaser 10 erzeugt einen um eine Rotationsachse **11** rotierenden ersten Laserstrahl **12** und einen ruhenden zweiten Laserstrahl **13.** Der rotierende erste Laserstrahl 12 erzeugt eine Laserebene **14,** die senkrecht zur Rotationsachse 11 angeordnet ist, und der zweite Laserstrahl 13 verläuft senkrecht zur Laserebene 14 des ersten Laserstrahls 12.

Der Rotationslaser 10 umfasst ein Gerätegehäuse **15** und eine im Gerätegehäuse 15 angeordnete Messeinrichtung. Das Gerätegehäuse 15 besteht aus einem Grundgehäuse **16,** einem Rotationskopf **17** und mehreren Handgriffen **18.** Die Bedienung des Rotationslasers 10 erfolgt über eine Bedienungseinrichtung **19,** die in das Grundgehäuse 16 integriert ist und von außen bedienbar ist. Neben der in das Grundgehäuse 16 integrierten Bedienungseinrichtung 19 kann eine Fernbedienung **20** vorgesehen sein, die über eine Kommunikationsverbindung mit dem Rotationslaser 10 verbindbar ist.

Die Messeinrichtung des Rotationslasers 10 erzeugt im Inneren des Grundgehäuses 15 einen Laserstrahl, der auf eine um die Rotationsachse 11 rotierende Umlenkoptik **21** trifft. Ein erster Teil des Laserstrahls wird von der Umlenkoptik 21 um 90° umgelenkt und bildet den ersten Laserstrahl 12 des Rotationslasers 10. Ein zweiter Teil des Laserstrahls tritt durch die Umlenkoptik 21 hindurch und bildet den zweiten Laserstrahl 13 des Rotationslasers 10. Abhängig von der Rotationsgeschwindigkeit, mit der der erste Laserstrahl 12 um die Rotationsachse 11 rotiert wird, werden ein Rotationsmodus, ein Linienmodus und ein Punktmodus des Rotationslasers 10 unterschieden.

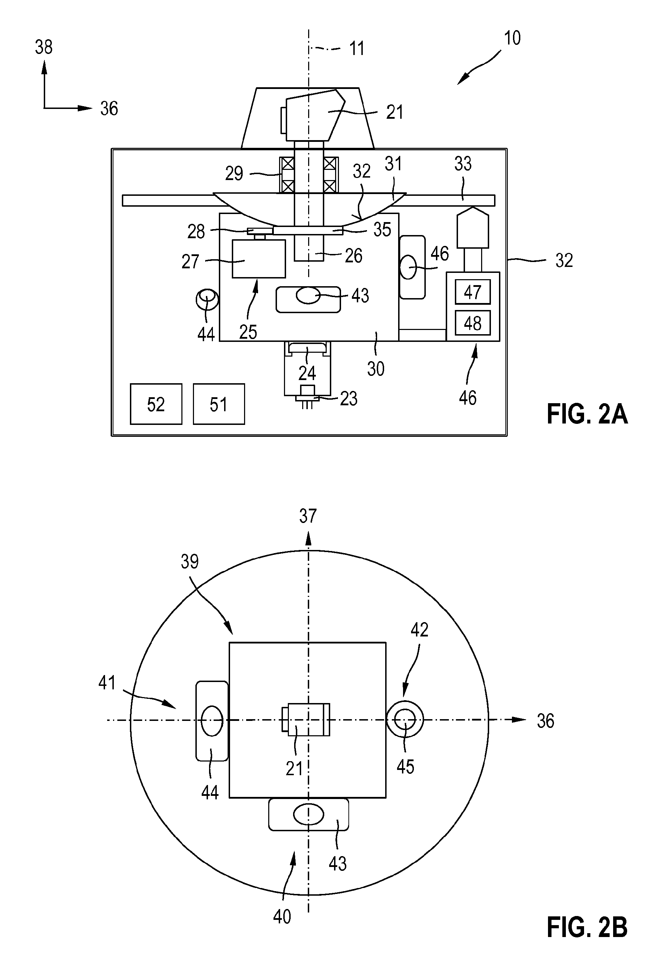

**FIGN. 2A****, B** zeigen die wesentlichen Komponenten des Rotationslasers 10 der FIG. 1 in einer schematischen Darstellung, wobei FIG. 2A die Komponenten in einer Vertikalebene parallel zur Rotationsachse 11 und FIG. 2B die Komponenten in einer Horizontalebene senkrecht zur Rotationsachse 11 darstellt.

Der Rotationslaser 10 umfasst eine Lasereinrichtung mit einer Strahlquelle **23,** die einen Laserstrahl erzeugt, und einer Kollimationsoptik **24.** Die Strahlquelle 23 ist beispielsweise als Halbleiterlaser ausgebildet, der den Laserstrahl im sichtbaren Wellenlängenspektrum erzeugt, beispielsweise einen roten Laserstrahl mit einer Wellenlänge von 635 nm oder einen grünen Laserstrahl mit einer Wellenlänge von 532 nm. Nach dem Austritt des Laserstrahls aus der Strahlquelle 23 wird der Laserstrahl mit Hilfe der Kollimationsoptik 24 kollimiert. Alternativ kann die Kollimationsoptik in die Strahlquelle integriert sein oder bei einer Strahlquelle 23 mit einer hohen Strahlqualität und geringen Divergenz kann die Kollimationsoptik entfallen.

Der kollimierte Laserstrahl trifft auf die Umlenkoptik 21, die den ersten und zweiten Laserstrahl 12, 13 trennt. Die Umlenkoptik 21 ist mit einer Dreheinrichtung **25** verbunden, die die Umlenkoptik 21 um die Rotationsachse 11 bewegt. Die Dreheinrichtung 25 umfasst eine drehbare Welle **26,** eine Motoreinheit **27** und eine Übertragungseinrichtung **28,** die beispielsweise in Form eines Zahnriemens ausgebildet ist und die Bewegung der Motoreinheit 27 auf die Welle 26 überträgt. Die Umlenkoptik 21 ist mit der drehbaren Welle 26 gekoppelt und um die Rotationsachse 11 drehbar ausgebildet. Die Welle 26 ist in einem Drehlager **29** eines Statorteils **30** gelagert, das mit einer Kugelkalotte **31** verbunden ist. Die Kugelkalotte 31 ist in einer Kugelkalottenlagerung **32** in einem gehäusefesten Montagerahmen **33** um zwei zur Rotationsebene (Ebene senkrecht zur Rotationsachse 11) senkrechte Schwenkebenen neigbar gelagert. Der Rotationslaser 10 umfasst eine Messeinrichtung **35,** die den Drehwinkel der Welle 26 während der Rotation um die Rotationsachse 11 misst. Die Messeinrichtung 35 ist beispielsweise als Winkelencoder ausgebildet und besteht aus einer Maßscheibe, die mit der Welle 26 drehfest verbunden ist, einer Abtasteinrichtung, mit der die Maßscheibe abgetastet wird, und einem Auswerte- und Steuerelement.

Der Rotationslaser 10 ist als horizontal und vertikal einsetzbarer Rotationslaser ausgebildet, wobei sich ein horizontal und vertikal einsetzbarer Rotationslaser durch eine zusätzliche Geräteachse von einem horizontal einsetzbaren Rotationslaser unterscheidet. Der Rotationslaser 10 weist als Geräteachsen eine erste Horizontalachse **36** und eine zweite Horizontalachse **37** auf, die senkrecht zueinander verlaufen und eine Geräteebene aufspannen. Die erste und zweite Horizontalachse 36, 37 werden am Rotationskopf 17 des Rotationslasers 10 über Anzeigeelemente angezeigt. Der horizontal und vertikal einsetzbare Rotationslaser 10 weist neben der ersten und zweiten Horizontalachse 36, 37 eine weitere Geräteachse auf, die als Vertikalachse **38** bezeichnet wird und im Idealfall senkrecht zur Geräteebene der ersten und zweiten Horizontalachse 36, 37 ausgerichtet ist.

Der Rotationslaser 10 ist als selbstnivellierender Rotationslaser ausgebildet, der sich automatisch nivelliert, wenn das Gerätegehäuse 15 des Rotationslasers 10 innerhalb eines Selbstnivellierbereiches aufgestellt wird. Der Selbstnivellierbereich von Rotationslasern liegt typischerweise bei 5°. Der Rotationslaser 10 umfasst eine Nivelliereinrichtung **39,** die die Geräteachsen des Rotationslasers 10 unabhängig von einer Ausrichtung des Gerätegehäuses 15 in einen definierten Zustand ausrichtet. Die Nivelliereinrichtung 39 umfasst eine erste Nivelliereinheit **40,** die die erste Horizontalachse 36 in einen ersten definierten Zustand ausrichtet, eine zweite Nivelliereinheit **41,** die die zweite Horizontalachse 37 in einen zweiten definierten Zustand ausrichtet, und eine dritte Nivelliereinheit **42,** die die Vertikalachse 38 in einen dritten definierten Zustand ausrichtet.

Die erste Nivelliereinheit 40 umfasst einen ersten Neigungssensor **43** und ein erstes Verstellelement, die zweite Nivelliereinheit 41 umfasst einen zweiten Neigungssensor **44** und ein zweites Verstellelement und die dritte Nivelliereinheit 42 umfasst einen dritten Neigungssensor **45** und ein drittes Verstellelement. Die Verstellelemente der Nivelliereinheiten 40, 41, 42 sind in eine Neigungseinrichtung **46** integriert, die einen ersten Verstellmotor **47** und einen zweiten Verstellmotor **48** aufweist. Der erste Verstellmotor 47 neigt den Montagerahmen 33 um eine erste Schwenkachse, die mit der zweiten Horizontalachse 37 zusammenfällt, und der zweite Verstellmotor 48 neigt den Montagerahmen 33 um eine zweite Schwenkachse, die mit der ersten Horizontalachse 36 zusammenfällt. Der erste Verstellmotor 47 bildet das erste Verstellelement der ersten Nivelliereinheit 40 und der zweite Verstellmotor 48 bildet das zweite Verstellelement der zweiten Nivelliereinheit 41. Da die Vertikalachse 38 senkrecht zur Horizontalebene der ersten und zweiten Horizontalachse 36, 37 ausgerichtet ist, kann die Ausrichtung der Vertikalachse 38 mittels des ersten und zweiten Verstellmotors 47, 48 eingestellt werden. Der erste und zweite Verstellmotor 47, 48 bilden gemeinsam das dritte Verstellelement der dritten Nivelliereinheit 42.

Die horizontale Ausrichtung der Laserebene bzw. der Gerätebene stellt einen bevorzugten definierten Zustand dar, in den ein Rotationslaser 10 in Horizontallage ausgerichtet werden soll, wobei die horizontal ausgerichtete Geräteebene auch als Horizontalebene bezeichnet wird. Die vertikale Ausrichtung der Laserebene bzw. der Geräteebene stellt einen bevorzugten definierten Zustand dar, in den ein Rotationslaser 10 in Vertikallage ausgerichtet werden soll, wobei die vertikal ausgerichtete Geräteebene auch als Vertikalebene bezeichnet wird. Die Laserebene, die der rotierende erste Laserstrahl 12 erzeugt, kann mittels der Neigungseinrichtung 46 gegenüber der Horizontalebene oder der Vertikalebene des Rotationslasers 10 geneigt werden. Der Rotationslaser 10 kann die Laserebene des rotierenden ersten Laserstrahls 12 in einer Neigungsrichtung oder in zwei Neigungsrichtungen neigen. Die Neigung der Laserebene erfolgt im nivellierten Zustand des Rotationslasers 10. Der Rotationslaser 10 kann in Horizontallage oder in Vertikallage geneigt werden.

Die Steuerung und Auswertung des Rotationslasers 10 erfolgt über Kontrollelemente, die mit der Strahlquelle 23, der Dreheinrichtung 25, der Messeinrichtung 35, der Nivelliereinrichtung 40, 41, 42 und der Neigungseinrichtung 46 verbunden sind. Die Kontrollelemente sind in eine gemeinsame Kontrolleinrichtung **51,** die beispielsweise als Mikrocontroller ausgebildet ist, integriert oder können als getrennte Komponenten ausgebildet sein. Die Rotationslaser 10 umfasst zusätzlich einen Temperatursensor **52,** der im Gerätegehäuse 15 des Rotationslasers 10 angeordnet ist. Der Temperatursensor 52 misst die Temperatur im Gerätegehäuse 15 und übermittelt die Temperatur an die Kontrolleinrichtung 51. Da die Ausrichtung der Neigungssensoren 43, 44, 45, die die Geräteachsen 36, 37, 38 des Rotationslasers 10 in den definierten Zustand ausrichten, temperaturabhängig ist und der Rotationslaser 11 in einem großen Temperaturbereich, beispielsweise zwischen -20 °C und +50 °C eingesetzt werden kann, ist es vorteilhaft, wenn in der Kontrolleinrichtung 51 des Rotationslasers 10 mehrere Nulllagen u gespeichert sind. Dazu können für den ersten Neigungssensor 43 mehrere erste Nulllagen υ₁, für den zweiten Neigungssensor 44 mehrere zweite Nulllagen υ₂ und für den dritten Neigungssensor 45 mehrere dritte Nulllagen υ₃ in Abhängigkeit von der Temperatur aufgenommen und in einer Kennlinie oder Tabelle gespeichert werden. Die zur gemessenen Temperatur zugehörige Nulllage wird aus der Kennlinie bzw. Tabelle abgelesen und die Geräteachse wird in den durch die Nulllage definierten Zustand ausgerichtet.

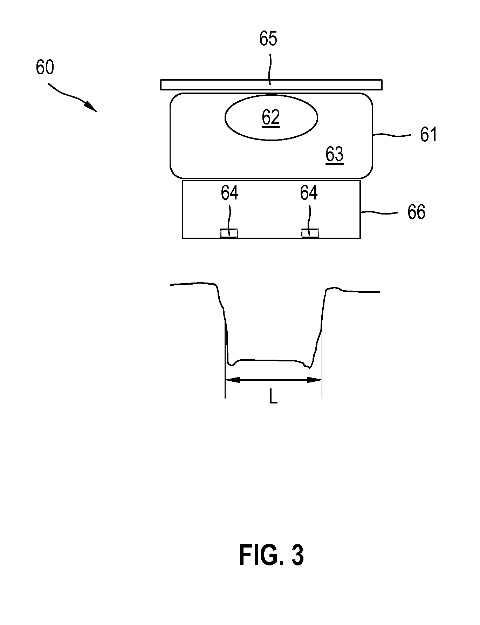

**FIG. 3** zeigt den Aufbau eines optischen Neigungssensors **60,** der im Aufbau den Neigungssensoren 43, 44, 45 für die Nivelliereinheiten 40, 41, 42 des Rotationslasers 10 entspricht. Der Neigungssensor 60 umfasst ein Gehäuse **61,** das mit einer Gasblase **62** und einer Flüssigkeit **63** gefüllt ist, eine Lichtquelle **64,** einen Fotodetektor **65** und einen Abstandhalter **66.**

Der Rotationslaser 10 weist drei Geräteachsen auf, die als erste Horizontalachse 36, zweite Horizontalachse 37 und Vertikalachse 38 ausgebildet sind. Die Nivelliereinrichtung 39 des Rotationslasers 10 umfasst für jede Geräteachse 37, 38, 39 eine Nivelliereinheit 40, 41, 42 mit einem Neigungssensor 43, 44, 45 und einem Verstellelement. Die Neigungssensoren 43, 44, 45 arbeiten unabhängig voneinander und können im Betrieb des Rotationslasers 10 unterschiedliche Temperaturen aufweisen.

Die Temperatur des Rotationslasers 10 kann mittels des Temperatursensors 52, der im Gerätegehäuse 15 des Rotationslasers 10 angeordnet ist, gemessen werden. Um die Genauigkeit der Temperaturmessung zu erhöhen, können mehrere Temperatursensoren 52 im Gerätegehäuse 15 angeordnet und eine gemittelte Temperatur bestimmt werden. Alternativ können die Temperaturen der Neigungssensoren 43, 44, 45 gemessen werden. Die Temperatur des ersten Neigungssensors 43 wird als erste Temperatur **T₁**, die Temperatur des zweiten Neigungssensors 44 als zweite Temperatur **T₂** und die Temperatur des dritten Neigungssensors 45 als dritte Temperatur **T₃** bezeichnet.

Die Gasblase 62 des Neigungssensors 60 weist eine Blasenlänge **L** auf, die temperaturabhängig ist und sich daher als Messgröße für die Temperatur T des Neigungssensors 60 eignet. Die Blasenlänge L der Gasblase 62 kann mit Hilfe der Lichtquelle 64 und des Fotodetektors 65 gemessen werden. Zur Unterscheidung des ersten, zweiten und dritten Neigungssensors 43, 44, 45 werden die Komponenten der Neigungssensoren 43, 44, 45 mit einem Index versehen, der durch einen Bindestrich vom Bezugszeichen abgetrennt ist. Der erste Neigungssensor 43 weist den Index "1", der zweite Neigungssensor 44 den Index "2" und der dritte Neigungssensor 45 den Index "3" auf. Die erste Temperatur T₁ des ersten Neigungssensors 43 wird über eine erste Blasenlänge **L₁** der ersten Gasblase 62-1 bestimmt, die zweite Temperatur T₂ des zweiten Neigungssensors 44 wird über eine zweite Blasenlänge **L₂** der zweiten Gasblase 62-2 bestimmt und die dritte Temperatur **T₃** des dritten Neigungssensors 45 wird über eine dritte Blasenlänge **L₃** der dritten Gasblase 62-3 bestimmt.

Die Temperaturmessung mittels der Neigungssensoren 43, 44, 45 hat gegenüber einer Temperaturmessung mittels des Temperatursensors 52 den Vorteil, dass die Temperatur T₁, T₂, T₃ genau an dem Ort im Gerätegehäuse 15 des Rotationslasers 10 gemessen wird, der für die Ausrichtung der ersten Horizontalachse 36, der zweiten Horizontalachse 37 und der Vertikalachse 38 relevant ist. Der erste Neigungssensor 43 misst die erste Temperatur T₁ und den ersten Neigungswinkel der ersten Horizontalachse 36, der zweite Neigungssensor 44 misst die zweite Temperatur T₂ und den zweiten Neigungswinkel der zweiten Horizontalachse 37 und der dritte Neigungssensor 47 misst die dritte Temperatur T₃ und den dritten Neigungswinkel der Vertikalachse 38.

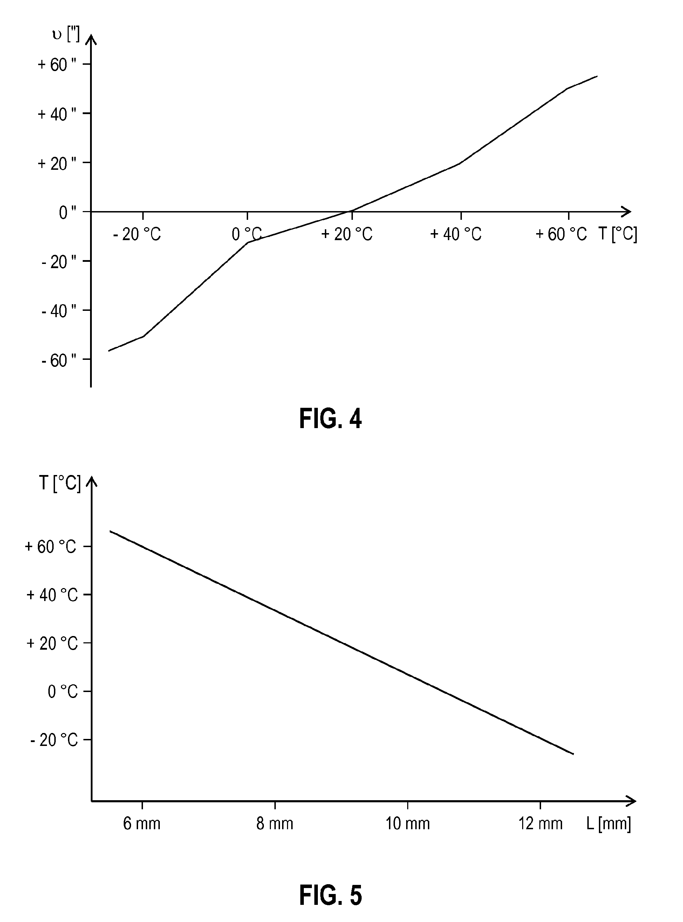

**FIG. 4** zeigt eine Kennlinie, die die Nulllage u des Neigungssensors 60 abhängig von der Temperatur T darstellt. Die Kennlinie stellt für den zugelassenen Temperaturbereich des Rotationslasers 10 von -20 °C bis +50 °C einen Zusammenhang zwischen der Temperatur T des Neigungssensors 60 und der Nulllage u des Neigungssensors 60, die der Ausrichtung in den definierten Zustand des Neigungssensors 60 entspricht, her.

Um den Rotationslaser 10 in einen definierten Zustand auszurichten, wird die Temperatur T des Rotationslasers 10 mit Hilfe des Temperatursensors 52 gemessen und an die Kontrolleinrichtung 51 übermittelt. Anhand der Kennlinie werden die zugehörigen Nulllagen υ₁, υ₂, υ₃ der Neigungssensoren 43, 44, 45 ermittelt und die Geräteachsen 36, 37, 38 mittels der Nivelliereinheiten 40, 41, 42 in den definierten Zustand ausgerichtet. Die Genauigkeit beim Ausrichten der Geräteachsen 36, 37, 38 des Rotationslasers 10 kann erhöht werden, wenn die Temperaturen T₁, T₂, T₃ der Neigungssensoren 43, 44, 45 gemessen werden und/oder für jeden Neigungssensor 43, 44, 45 der Nivelliereinrichtung 39 eine eigene Kennlinie, die die Nulllage u abhängig von der Temperatur T darstellt, bestimmt wird.

Die Temperaturen T₁, T₂, T₃ der Neigungssensoren 43, 44, 45 können mittels der Neigungssensoren 43, 44, 45 selbst gemessen werden. Die Gasblase eines Neigungssensors weist eine Blasenlänge L auf, die temperaturabhängig ist und sich daher als Messgröße für die Temperatur eignet, wobei die Blasenlänge L mit Hilfe der Lichtquelle 64 und des Fotodetektors 65 des Neigungssensors gemessen werden kann. Die Kontrolleinrichtung 51 des Rotationslasers 10 weist eine erste Kennlinie, die die erste Nulllage υ₁ des ersten Neigungssensors 43 abhängig von der ersten Temperatur T₁ darstellt, eine zweite Kennlinie, die die zweite Nulllage υ₂ des zweiten Neigungssensors 44 abhängig von der zweiten Temperatur T₂ darstellt, und eine dritte Kennlinie, die die dritte Nulllage υ₃ des dritten Neigungssensors 45 abhängig von der dritten Temperatur T₃ darstellt, auf.

Um die Temperatur der Neigungssensoren ohne zusätzlichen Temperatursensor messen zu können, muss der Zusammenhang zwischen der Blasenlänge L der Gasblase 62 und der Temperatur des Neigungssensors bekannt sein. Dazu ist in der Kontrolleinrichtung 51 des Rotationslasers 10 eine weitere Kennlinie gespeichert, die für die Geräteachse einen Zusammenhang zwischen der Temperatur T und der Blasenlänge L der Gasblase 62 herstellt.

**FIG. 5** zeigt die weitere Kennlinie, die die Temperatur T des Neigungssensors 60 abhängig von der Blasenlänge L der Gasblase 62 darstellt. Die weitere Kennlinie stellt für den zugelassenen Temperaturbereich des Rotationslasers 10 von -20 °C bis +50 °C einen Zusammenhang zwischen der Temperatur T des Neigungssensors 60 und der Blasenlänge L der Gasblase 62 her. Die Blasenlänge L der Gasblase 62 verändert sich linear mit der Temperatur T des Neigungssensors 60, wobei die Blasenlänge L mit sinkender Temperatur T abnimmt.

Die Genauigkeit beim Ausrichten der Geräteachsen 36, 37, 38 des Rotationslasers 10 kann erhöht werden, wenn für jeden Neigungssensor 43, 44, 45 der Nivelliereinrichtung 39 eine eigene weitere Kennlinie, die die Temperatur des Neigungssensors abhängig von der Blasenlänge der Gasblase darstellt, bestimmt wird. Die Kontrolleinrichtung 51 des Rotationslasers 10 weist eine weitere erste Kennlinie, die die erste Temperatur T₁ des ersten Neigungssensors 43 abhängig von der ersten Blasenlänge L₁ der ersten Gasblase 62-1 darstellt, eine weitere zweite Kennlinie, die die zweite Temperatur T₂ des zweiten Neigungssensors 44 abhängig von der zweiten Blasenlänge L₂ der zweiten Gasblase 62-2 darstellt, und eine weitere dritte Kennlinie, die die dritte Temperatur T₃ des dritten Neigungssensors 45 abhängig von der dritten Blasenlänge L₃ der dritten Gasblase 62-3 darstellt, auf.

FIG. 4 zeigt eine Kennlinie, bei der die Nulllage u des Neigungssensors 60 in Abhängigkeit von der Temperatur T dargestellt ist. Das erfindungsgemäße Verfahren kann auch mit einer von der Temperatur T abhängigen Messgröße durchgeführt werden. In diesem Fall wird nicht die Temperatur der Apparatur gemessen, sondern die temperaturabhängige Messgröße. Als Messgröße eignen sich temperaturabhängige Größen der Apparatur, deren Temperaturabhängigkeit bekannt ist. Die Messung einer temperaturabhängigen Messgröße bietet sich dann an, wenn eine Messgröße genutzt wird, die bereits für andere Zwecke gemessen wird, so dass kein zusätzlicher Messaufwand besteht, oder wenn eine Messgröße genutzt wird, die mit vorhandenen Sensorelementen gemessen werden kann, so dass kein zusätzlicher apparativer Aufwand besteht. Die Gasblase des Neigungssensors weist eine Blasenlänge auf, die temperaturabhängig ist und sich daher als Messgröße für die Temperatur des Neigungssensors eignet. Die Blasenlänge kann mit Hilfe der Lichtquelle und des Fotodetektors des Neigungssensors gemessen werden, so dass kein weiteres Sensorelement für die Messung erforderlich ist.

Wenn das erfindungsgemäße Verfahren mit der temperaturabhängigen Blasenlänge der Gasblase als Messgröße durchgeführt wird, wird die Kennlinie der FIG. 4, die die Nulllage u des Neigungssensors 60 in Abhängigkeit von der Temperatur T darstellt, durch eine Kennlinie ersetzt, die die Nulllage u des Neigungssensors 60 in Abhängigkeit von der Blasenlänge L der Gasblase 62 darstellt. Die Kontrolleinrichtung 51 des Rotationslasers 10 weist eine erste Kennlinie, die die erste Nulllage υ₁ des ersten Neigungssensors 43 in Abhängigkeit von der ersten Blasenlänge L₁ der ersten Gasblase 62-1 darstellt, eine zweite Kennlinie, die die zweite Nulllage υ₂ des zweiten Neigungssensors 44 in Abhängigkeit von der zweiten Blasenlänge L₂ der zweiten Gasblase 62-2 darstellt, und eine dritte Kennlinie, die die dritte Nulllage υ₃ des dritten Neigungssensors 45 in Abhängigkeit von der dritten Blasenlänge L₃ der dritten Gasblase 62-3 darstellt, auf.

## Patentansprüche

1. Verfahren zum Ausrichten einer Geräteachse (36, 37, 38) einer Apparatur (10) mittels einer Nivelliereinheit (40, 41, 42) in einen definierten Zustand, mit den Schritten:
▪ Speichern einer Kennlinie von Nulllagen (u) eines Neigungssensors (60) der Nivelliereinheit (40, 41, 42) in Abhängigkeit von einer Betriebstemperatur (T) der Apparatur (10) oder einer von der Betriebstemperatur (T) abhängigen Messgröße (L) in einer Kontrolleinrichtung (51),
▪ Messen der Betriebstemperatur (T) oder der Messgröße (L),
▪ Ermitteln der zugehörigen Nulllage (u) des Neigungssensors (60) zur gemessenen Betriebstemperatur (T) oder Messgröße (L) anhand der Kennlinie und
▪ Ausrichten der Geräteachse (36, 37, 38) mittels der Nivelliereinheit (40, 41, 42) in den definierten Zustand, der durch die anhand der Kennlinie ermittelte Nulllage (u) festgelegt ist.

2. Verfahren nach Anspruch 1, **dadurch gekennzeichnet, dass** die Betriebstemperatur (T) der Apparatur (10) mittels des Neigungssensors (60), der ein Gehäuse (61), das mit einer Gasblase (62) und einer Flüssigkeit (63) gefüllt ist, eine Lichtquelle (64) und mindestens einen Fotodetektor (65) umfasst, gemessen wird.

3. Verfahren nach Anspruch 2, **dadurch gekennzeichnet, dass** in der Kontrolleinrichtung (51) eine weitere Kennlinie von Betriebstemperaturen (T) und Blasenlängen (L) der Gasblase (62) gespeichert wird, die Blasenlänge (L) der Gasblase (62) mittels der Lichtquelle (64) und des Fotodetektors (65) des Neigungssensors (60) gemessen wird und die zur gemessenen Blasenlänge (L) zugehörige Betriebstemperatur (T) anhand der weiteren Kennlinie ermittelt wird.

4. Verfahren nach einem der Ansprüche 1 bis 3, **dadurch gekennzeichnet, dass** die Genauigkeit, mit der die Geräteachse (36, 37, 38) der Apparatur (10) mittels der Nivelliereinheit (40, 41, 42) in den definierten Zustand ausgerichtet wird, während des Betriebs der Apparatur (10) mittels einer festgelegten Prüfschleife überprüft wird, wobei eine Abweichung vom definierten Zustand der Geräteachse (36, 37, 38) bestimmt und mit einer Maximalabweichung verglichen wird.

5. Verfahren nach Anspruch 4, **dadurch gekennzeichnet, dass** eine neue Nulllage des Neigungssensors (60) für den definierten Zustand der Geräteachse (36, 37, 38) berechnet wird und die Kennlinie von Nulllage und Betriebstemperatur (T) oder die Kennlinie von Nulllage und Messgröße (L) aktualisiert wird, wenn die Abweichung vom definierten Zustand der Geräteachse (36, 37, 38) grösser als die Maximalabweichung ist.

6. Verfahren nach Anspruch 5, **dadurch gekennzeichnet, dass** in der Kennlinie eine gespeicherte Nulllage (u) des Neigungssensors (60) für den definierten Zustand der Geräteachse (36, 37, 38) durch die neue Nulllage (u) ersetzt wird, wenn die Kennlinie für die gemessene Betriebstemperatur (T) oder Messgröße (L) eine gespeicherte Nulllage (u) aufweist.

7. Verfahren nach Anspruch 5, **dadurch gekennzeichnet, dass** in der Kennlinie ein neues Wertepaar von Nulllage (u) des Neigungssensors (60) und Temperatur (T) oder Messgröße (L) ergänzt wird, wenn die Kennlinie für die gemessene Betriebstemperatur (T) oder Messgröße (L) keine gespeicherte Nulllage (u) des Neigungssensors (50) aufweist.

8. Verfahren nach Anspruch 1, **dadurch gekennzeichnet, dass** im Auslieferungszustand der Apparatur (10) vom Hersteller die Kennlinie von Nulllage (u) und Temperatur (T) oder Messgröße (L) über einen Temperaturbereich (ΔT) zwischen einer unteren Temperatur (Tₘᵢₙ) und einer oberen Temperatur (Tₘₐₓ) in der Kontrolleinrichtung (51) gespeichert wird, wobei die Kennlinie mindestens zwei Wertepaare von Nulllagen (u) für den definierten Zustand der Geräteachse (36, 37, 38) und Betriebstemperaturen (T) oder Messgrößen (L) aufweist.

9. Apparatur (10) mit mindestens einer Geräteachse (36, 37, 38), die in einen definierten Zustand ausrichtbar ist, aufweisend:
▪ eine Kontrolleinrichtung (51);
▪ einen Neigungssensor (43, 44, 45; 60) mit einem Gehäuse (61), das mit einer Gasblase (62) und einer Flüssigkeit (63) gefüllt ist, einer Lichtquelle (64) und mindestens einem Fotodetektor (65), wobei der Neigungssensor (43, 44, 45; 60) mit der Geräteachse (36, 37, 38) verbunden ist und die Ausrichtung der Geräteachse (36, 37, 38) zum definierten Zustand misst, und
▪ ein Verstellelement (46, 47), das mit der Geräteachse (36, 37, 38) verbunden ist und die Ausrichtung der Geräteachse (36, 37, 38) einstellt,
**dadurch gekennzeichnet, dass** in der Kontrolleinrichtung (51) eine Kennlinie vorgesehen ist, die eine Nulllage (u) des Neigungssensors (43, 44, 45; 60) in Abhängigkeit von einer Betriebstemperatur (T) der Apparatur (10) oder einer von der Betriebstemperatur (T) abhängigen Messgröße (L) darstellt.

10. Apparatur nach Anspruch 9, **dadurch gekennzeichnet, dass** in der Kontrolleinrichtung (51) eine weitere Kennlinie vorgesehen ist, die die Betriebstemperatur (T) der Apparatur (10) in Abhängigkeit von einer Blasenlänge (L) der Gasblase (62) des Neigungssensors (60) darstellt.

11. Apparatur nach einem der Ansprüche 9 bis 10, **dadurch gekennzeichnet, dass** die Apparatur (10) eine erste Geräteachse (36), die mittels eines ersten Neigungssensors (43) und eines ersten Verstellelementes (46) in einen ersten definierten Zustand ausrichtbar ist, und eine zweite Geräteachse (37), die mittels eines zweiten Neigungssensors (44) und eines zweiten Verstellelementes (47) in einen zweiten definierten Zustand ausrichtbar ist, aufweist und in der Kontrolleinrichtung (51) eine erste Kennlinie und zweite Kennlinie vorgesehen sind, wobei die erste Kennlinie eine erste Nulllage (υ₁) der ersten Geräteachse (36) im ersten definierten Zustand in Abhängigkeit von der Betriebstemperatur (T) oder Messgröße (L) darstellt und die zweite Kennlinie eine zweite Nulllage (υ₂) der zweiten Geräteachse (37) im zweiten definierten Zustand in Abhängigkeit von der Betriebstemperatur (T) oder Messgröße (L) darstellt.

12. Apparatur nach Anspruch 11, **dadurch gekennzeichnet, dass** in der Kontrolleinrichtung (51) eine weitere erste Kennlinie und eine weitere zweite Kennlinie vorgesehen sind, wobei die weitere erste Kennlinie eine erste Temperatur (T₁) des ersten Neigungssensors (43) in Abhängigkeit von einer ersten Blasenlänge (L₁) einer ersten Gasblase (62-1) des ersten Neigungssensors (43) darstellt und die weitere zweite Kennlinie eine zweite Temperatur (T₂) des zweiten Neigungssensors (44) in Abhängigkeit von einer zweiten Blasenlänge (L₂) einer zweiten Gasblase (62-2) des zweiten Neigungssensors (44) darstellt.
